Europäisches Patentamt

European Patent Office

Office européen des brevets

(19)

(11) **EP 1 591 804 A1**

(12) **EUROPEAN PATENT APPLICATION**
published in accordance with Art. 158(3) EPC

(43) Date of publication:
**02.11.2005 Bulletin 2005/44**

(51) Int Cl.⁷: **G02B 1/10**, B32B 7/02,
C08J 7/04

(21) Application number: **04708852.1**

(22) Date of filing: **06.02.2004**

(86) International application number:
**PCT/JP2004/001269**

(87) International publication number:
**WO 2004/070436 (19.08.2004 Gazette 2004/34)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **06.02.2003 JP 2003029834**

(71) Applicant: **SDC Technologies-Asia Ltd.
Ichibara-shi, Chiba 2990107 (JP)**

(72) Inventor: **TAKAHASHI, Koji
c/o SDC Technologies-Asia Limited
Ichibara-shi, Chiba 299-0107 (JP)**

(74) Representative: **Wilson, Peter
Novagraaf Patents Limited,
The Crescent,
54 Blossom Street
York YO24 1AP (GB)**

(54) **METHOD FOR PRODUCING ARTICLE HAVING BEEN SUBJECTED TO LOW REFLECTION TREATMENT, SOLUTION FOR FORMING LOW REFLECTION LAYER AND ARTICLE HAVING BEEN SUBJECTED TO LOW REFLECTION TREATMENT**

(57)    A low reflection treated article manufacturing method wherein a low reflection layer solution, obtained by mixing and reacting (1) silica microparticles, comprising at least one type of silica microparticles selected from the group consisting of non-aggregated silica microparticles with an average particle diameter of 40 to 1000nm, hollow non-aggregated silica microparticles with an average particle diameter of 10 to 100nm, and chain-like aggregated silica microparticles with an average primary particle diameter of 10 to 100nm, (2) a hydrolyzable silicon compound, water, and a binder solution, containing a solvent and a hydrolysis catalyst for the above-mentioned silicon compound, to hydrolyze the above-mentioned silicon compound and (3) adding a curing catalyst, which promotes the condensation of silanol groups, is coated onto a resin base material and reacted and cured at room temperature or within a range of room temperature to "a temperature at which the base material will not be damaged" (the deformation temperature or less in the case of a thermoplastic resin or the decomposition temperature or less in the case of a hardening resin) to form a low reflection layer, containing silica microparticles and a binder at a solids weight ratio of 30:70 to 95:5.

**EP 1 591 804 A1**

**Description**

Technical Field

This invention concerns a method of manufacturing synthetic resin articles with low reflection properties, such as the outermost surfaces of displays (notebook personal computers, monitors, PDP, PDA), outermost surfaces of touch panel monitors, cellular phone windows, pickup lenses, optical lenses, eyeglass lenses, optical filters, end surfaces of optical parts, transparent parts for vehicles (headlamp covers, windows), non-transparent parts for vehicles (instrument panel surfaces), meter covers, building windows, show windows, transparent base materials for solar cells, transparent panels for solar water heaters, transparent optical parts, etc., and also concerns a low reflection layer forming solution (hereinafter referred to as "low reflection layer solution"), and a low reflection treated article.

Background Art

For the lowering of the reflectance of visible light of a transparent base material, the achieving of low reflection by the adding of a film on the transparent base material is widely known. Particularly in regard to a method of laminating two or more layers of film in the process of film forming on a glass plate and making use of the actions of interference of light to realize low reflection, Japanese Published Unexamined Patent Application No. Hei 4-357134, for example, discloses a reflection-lowered transparent glass plate for vehicles having a two-layer film structure, formed by coating the surface of at least one side of a transparent glass base material with a thin film layer, with a refractive index n1 of 1.8 to 1.9 and a film thickness of 700 to 900 angstroms, as a first layer from the transparent glass surface side and then coating and laminating a thin film layer, with a refractive index n2 of 1.4 to 1.5 and a film thickness of 1100 to 1300 angstroms, as a second layer onto the first-layer thin film, and furthermore characterized in that the reflectance of visible light, which is made incident from the film surface side at an angle of incidence, formed with a line perpendicular to the above-mentioned surface, of 50 degrees to 70 degrees at the surface on which the above-mentioned thin films are coated and laminated, is lowered by 4.5 to 6.5%. Also, Japanese Published Unexamined Patent Application No. Hei 4-357135 proposes a glass plate, to which a low reflection layer, formed of a three-layer film, is applied.

Meanwhile, in regard to a method of lowering reflection by providing a single layer of film on a glass base material, for example, Japanese Published Unexamined Patent Application No. Sho 63-193101 discloses an antireflection film, formed by coating the surface of a glass body with an alcohol solution of Si (OR) 4 (R being an alkyl group), to which $SiO_2$ microparticles are added, and thereafter drying to attach the $SiO_2$ microparticles and the $SiO_2$ thin film that coats the microparticles onto the glass body surface.

In Japanese Published Unexamined Patent Application No. Sho 62-17044 discloses an antireflection film, formed by mixing colloidal silica, with a particle diameter of 5 to 100nm, with a metal alkolate, such as tetraethoxysilane, at a proportion of 1 mole of metal alkolate to 1 mole of colloidal silica, dissolving this mixture in an alcohol or other organic solution to prepare a mixture solution, preparing a sol solution by subjecting this mixture solution to hydrolysis and partial condensation, coating this sol solution onto an optical element surface, and performing heat treatment.

Also in Japanese Published Unexamined Patent Application No. Hei 11-292568 discloses a low visible light reflection glass, coated with a low reflection layer of a thickness of 110 to 250nm and containing chain-like silica microparticles and 5 to 30 weight % of silica with respect to the chain-like silica microparticles.

As described in Optical Engineering Vol. 21 No. 6, (1982) page 1039, such low reflection layers, formed of a single low refractive index layer, are known to be low in the incidence angle dependence of reflectance and to be wide in the wavelength range of low reflectance due to being small in the wavelength dependence of reflectance.

Furthermore, Japanese Published Unexamined Patent Application No. 2001-278637 discloses a low reflection glass, prepared by mixing raw material microparticles, comprising at least either non-aggregated silica microparticles, with an average particle diameter of 40 to 1000nm, or chain-like aggregated silica microparticles, with an average primary particle diameter of 10 to 100nm, with a hydrolyzable metal compound, water, and a solvent, coating a low reflection solution, obtained by hydrolyzing the above-mentioned hydrolyzable metal compound under the presence of the above-mentioned microparticles, onto a glass base material, and then performing heat treatment.

As described in Optical Engineering Vol. 21 No. 6, (1982) P1039, such low reflection layers, formed of a single low refractive index layer, is known to be low in the incidence angle dependence of reflectance and to be wide in the wavelength range of low reflectance due to being small in the wavelength dependence of reflectance.

The above-described coating methods, vapor deposition methods, etc. , may be cited as methods of lowering reflectance, and especially in regard to vapor deposition methods (physical vapor deposition and chemical vapor deposition), antireflection films, formed by lamination of two or more layers of thin film layers of various film materials and film compositions, have been proposed.

The above-described prior arts have the following issues:

(1) In cases where a low reflection layer is coated onto a transparent base material, under low temperature heating, the curing polymerization reaction of the coating film does not proceed readily and since a three-dimensional polymerization structure thus cannot be formed, the coating film that is obtained is low in abrasion resistance.

(2) In cases where a low reflection treatment is applied to a transparent resin base material, an adequate abrasion resistance is not realized, and the abrasion resistance also degrades due to deformation of the low reflection layer against external pressure. This is because, though in cases where a glass base material is used as the base material for a low reflection layer, deformation is restrained by the rigidity of glass, in cases where a resin base material is used, since the hardness of a resin itself is low, a strength comparable to a glass base material cannot be obtained.

(3) Since transparent resin base materials do not have heat resistance, high-temperature treatment for securing the strength of the above-mentioned low reflection layer cannot be performed.

An object of this invention is to provide a low reflection treated article manufacturing method, low reflection layer solution, and low reflection treated article, with which when applied to a resin base material, a low reflection layer against visible light or infrared light, which provides a film abrasion resistance of a practical level, is formed.

Disclosure of the Invention

This invention provides a low reflection treated article manufacturing method wherein a low reflection layer solution, obtained by mixing and reacting (1) silica microparticles, comprising at least one type of silica microparticles selected from the group consisting of non-aggregated silica microparticles with an average particle diameter of 40 to 1000nm, hollow non-aggregated silica microparticles with an average particle diameter of 10 to 100nm, and chain-like aggregated silica microparticles with an average primary particle diameter of 10 to 100nm, (2) a hydrolyzable silicon compound, water, and a binder solution, containing a solvent and a hydrolysis catalyst for the above-mentioned silicon compound, to hydrolyze the above-mentioned silicon compound and (3) adding a curing catalyst, which promotes the condensation of silanol groups, is coated onto a resin base material and reacted and cured at room temperature or within a range of room temperature to "a temperature at which the base material will not be damaged" (the deformation temperature or less in the case of a thermoplastic resin or the decomposition temperature or less in the case of a hardening resin) to form a low reflection layer, containing silica microparticles and a binder at a solids weight ratio of 30:70 to 95:5.

By this invention's low reflection treated article manufacturing method, the polymerization efficiency during curing is improved, three-dimensional polymerization can be accomplished even at low temperature, and the abrasion resistance can be improved. Also, by a part of the organic matter remaining, flexibility is obtained.

Also, in a case where a binder, formed by oligomerizing a hydrolyzable silicon compound in advance, is used, by performing hydrolysis under the coexistence of the microparticles, entanglement of the microparticles with the binder, entanglement of the binder with itself, and further polymerization proceed and the polymerization during curing can thus be carried out more efficiently.

Furthermore, even in a case where a surfactant or a hydrolyzed silane fluoride or an organic conductive material is added to the said low reflection layer solution as necessary, the decomposition of the organic matter by low-temperature heating can be restrained and an above substance can thus be added without lowering its characteristics.

Furthermore, an intermediate layer that can be adhered to the materials of both the resin base material and the low reflection layer, a hard coat layer of excellent rigidity and hardness, or a glare-proof layer that adds a glare-proof property may be formed between the resin base material and the low reflection layer in accordance to the purpose and the abrasion strength of the low reflection layer can thereby be improved further.

Also, by performing the above-mentioned treatments after subjecting the resin base material surface to a hydrophilization treatment and introducing -COOH, -OH, or >C=O to the base material surface as necessary, application to various base materials, with which attachment properties cannot be obtained readily, is enabled.

The basic structures of this invention are as follows:

Structure 1 : Resin base material (including a sheet or a film) / low reflection layer
Structure 2 : Resin base material / intermediate layer / low reflection layer
Structure 3 : Resin base material / hard coat layer /low reflection layer
Structure 4 : Resin base material / glare-proof layer / low reflection layer
Structure 5 : Resin base material / intermediate layer / hard coat layer or glare-proof layer / low reflection layer
Structure 6 : Resin base material / substrate layer of any of Structures 1 to 5 / low reflection layer (containing a hydrolyzable silane fluoride)
Structure 7 : Resin base material / substrate layer of any of Structures 1 to 5 / low reflection layer (containing a conductive material)

Structure 8 : Resin base material / substrate layer of any of Structures 1 to 5 / low reflection layer / water repellent layer

With Structure 1, a low reflection layer is provided directly on a surface of a resin base material.

With Structure 2, an intermediate layer is provided on a surface of a resin base material and a low reflection layer is laminated further on top. The intermediate layer is coated on by the same method as the low reflection layer. The film thickness is preferably 1 to 10 μm.

With Structure 3, a hard coat layer is provided between a resin base material and a low reflection layer to improve the rigidity and surface hardness of the base material, and by two-dimensional to three-dimensional polymerization with the low reflection layer, the film strength is improved over those of Structures 1 and 2.

The hard coat layer may be coated on by the same method as the low reflection layer. Though a description shall be provided later, the curing may be adjusted by a curing catalyst, and a hard coat a is obtained by curing by means of activation energy rays and a hard coat b is obtained by heat curing. The film thickness of the hard coat layer is preferably set to 0.1 to 30 μ m and more preferably 0.1 to 20 μm in accordance to the purpose of coating.

With Structure 4, metal or inorganic compound microparticles of 0.05 to 20 μm are added in the hard coat of Structure 3, and the coated and cured sample has a structure wherein the surface of silica microparticles are covered by a binder and when a section in the thickness direction of the sample is viewed, there is just one microparticle in the thickness direction uniformly or two to five microparticles are layered, and furthermore, half or more of the diameter of the silica microparticles is embedded in the hard coat (binder) . This Structure 4 can be formed by the same conditions as those of Structure 3.

In Structure 5, Structures 2 and 3 or Structures 2 and 4 are combined.

In Structures 6 and 7, a fluorosilane or a conductive organic component is added to a low reflection layer solution.

In Structure 8, a low reflection layer surface has laminated thereon a water repellent layer, having reactive or non-reactive functional groups and containing fluorine in the structure thereof.

The "substrate layer of any of Structures 1 to 5" in the above-described Structures 6 to 8 refers to any of the layers between the resin base material and the low reflection layer of Structures 1 to 5.

The respective layers shall now be described in detail.

1. Low reflection layer

By mixing and reacting (1) silica microparticles, comprising at least one type of silica microparticles selected from the group consisting of non-aggregated silica microparticles with an average particle diameter of 40 to 1000nm, hollow non-aggregated silica microparticles with an average particle diameter of 10 to 100nm, and chain-like aggregated silica microparticles with an average primary particle diameter of 10 to 100nm, (2) a hydrolyzable silicon compound, water, and a binder solution, containing a solvent and a hydrolysis catalyst for the above-mentioned silicon compound and (3) adding a curing catalyst, which promotes the condensation of silanol groups, to provide a low reflection layer solution, and then coating this low reflection layer solution onto the substrate layer of any of 1 to 5 and making the low reflection layer solution react and cure at room temperature or within a range of room temperature to "a temperature at which the base material will not be damaged" (the deformation temperature or less in the case of a thermoplastic resin or the decomposition temperature or less in the case of a hardening resin), a low reflection layer, containing silica microparticles and a binder at a solids weight ratio of 30:70 to 95:5, is formed.

The silica microparticles that are the raw material microparticles used in the present invention may be prepared by any preparation method, and silica microparticles, synthesized by reacting a silicon alkoxide under the presence of ammonia or other basic catalyst by the sol-gel method, colloidal silica, formed using sodium silicate, etc. as the raw material, fumed silica, synthesized in the gas phase, etc., may be cited as examples.

The structure of the low reflection layer that is obtained varies greatly with the particle diameter of the silica microparticles. When the silica microparticles are too small in particle diameter, the voids that form between particles in the low reflection layer become small in size and the capillary force thus increases, causing the removal of attached contamination to be difficult, the refractive index of the film to change due to the gradual entry of moisture and organic matter from air into the above-mentionedvoids, and thus the reflectance to increase with time. Furthermore, the void percentage inside the film becomes small and the apparent refractive index increases.

Also, since the amount of binder, which is used for adhesion of the silica microparticles with each other and the silica microparticles with the resin base material, is defined in upper limit as shall be described later, when the silica microparticles are too small in particle diameter, the surface area of the microparticles becomes large relatively, and due to insufficiency of the amount of binder that reacts with these surfaces, the adhesion force of the film becomes weak. Also when the silica microparticle diameter (primary particle diameter) is too small, the value of the uneven roughness of the film surface or the internal void percentage of the film (the proportion of the space, which exists between the silica microparticles and is not filled with the binder, with respect to the film volume) becomes small, and the apparent refractive index thus increases.

Thus in order to (1) enable the contamination on the low reflection layer to be removed readily, (2) increase the film strength, and (3) lower the apparent refractive index so as to be close to the square root (approximately 1.18 to 1.34) of the refractive index (1.4 to 1.8) of the resin base material that is coated by the low reflection layer, the average value of the primary particle diameter of the silica microparticles (refractive index: approximately 1.45) is preferably no less than 40nm and more preferably no less than 50nm. Also, when the silica microparticles are too large in particle diameter, the scattering of light becomes severe and the adhesion to the resin base material is also weakened.

For applications requiring transparency, that is, for applications for which a low haze percentage, such as a haze percentage of 1% or less is desired as, for example, in the case of a window of a vehicle or a building, the average particle diameter of the silica microparticles is preferably 500nm or less and more preferably 300nm or less. The most preferable average particle diameter of the silica microparticles is 50 to 200nm and an average particle diameter of 70 to 160nm is the best.

In the case of an application that does not require transparency either a very high film strength, as for example in the case of a resin substrate for a solar cell, it is important to increase the transmittance by lowering the reflectance. Also, for increasing the absorption efficiency of sunlight inside a silicon film that is disposed close to the above-described resin substrate, it is advantageous to make long the optical path length inside the silicon film of the sunlight that has entered into the silicon film.

The light that is transmitted through the low reflection layer can be classified into directly transmitted light and diffusely transmitted light, and if the amount of diffusely transmitted light with respect to the amount of directly transmitted light increases, the haze percentage increases. When low reflection layers, which are equal in total light transmittance percentage (that is, equal in reflectance), are compared, a low reflection layer, with which the amount of diffusely transmitted light, among the light that has been transmitted through the low reflection layer, is high, that is, a low reflection layer with a high haze percentage, for example, a low reflection layer with a haze percentage of 10 to 80% is preferable for making the above-mentioned optical path length long. For a low reflection layer with such a high haze percentage, the use of silica microparticles with an average particle diameter of 100nm to 1000nm is preferable.

By using as the silica microparticles, hollow silica microparticles, having a space inside the microparticle interior, the quality of the low reflection layer can be improved further. By the silica microparticles having a space inside the microparticle interior, the refractive index of the silica microparticles can be lowered, and the silica microparticles can be contained in the low reflection layer at a high filling percentage in terms of volume with the refractive index being maintained. The space between microparticles is thereby reduced, the problem of the low reflection layer becoming soiled due to the gaps between the microparticles and the problem of entry of moisture and organic matter into the low reflection layer can be alleviated, and since the low reflection layer becomes more dense, the strength of the film is also improved. Also, since the hollow silica microparticles are lowered in their refractive index due to a space being held in the microparticle interior, the particle diameter can be made finer and the filling percentage be increased in comparison to silica microparticles that do not have a space in their interior. The particle diameter of hollow silica microparticles is preferably 10 to 100nm.

To determine the average particle diameter of the silica microparticles that are to be the raw material microparticles, the diameters (average values of the maj or and minor diameters) of primary particles (the individual primary particles in the case where chain-like secondary particles are formed by aggregation), within a planar view field of a transmission electron microscope set to 10 thousand to 50 thousand times magnification, are actually measured, and the average particle diameter is defined as the number average value d for a number of microparticles (n = 100) as determined by the equation given below.

This measured value thus differs from the particle diameter, determined by the BET method, which is indicated for colloidal silica, etc. The sphericity of the silica microparticles is expressed by a value determined by averaging the respective major axis length to minor axis ratios of 100 microparticles. The standard deviation of the microparticle particle diameter, which expresses the particle size distribution of microparticles, is determined from the above-mentioned diameter and by means of Equations 2 and 3 given below. With each of the following Equations, n = 100.

[Equation 1]

$$d = \frac{\sum_{i=1}^{n} di}{n}$$

[Equation 2]

$$\sigma = \sqrt{\frac{\sum\limits_{i=1}^{n}(d - dj)^2}{n - 1}}$$

[Equation 3]

Standard deviation = $(d + \sigma)/ d$

The sphericity of the silica microparticles is preferably 1.0 to 1.2 since a low reflection layer with which the degree of filling of microparticles is made high will then be formed and the mechanical strength of the film will become high. More preferably, the sphericity is 1.0 to 1.1. When silica microparticles of uniform particle diameter are used, since the voids between microparticles can be made larger, the apparent refractive index of the film can be made lower and thus the reflectance can be decreased. The standard deviation of the particle diameter, which expresses the particle size distribution of the silica microparticles is thus preferably 1. 0 to 1.5, more preferably 1.0 to 1.3, and even more preferably 1.0 to 1.1.

A silica microparticle dispersion, in which the silica microparticles are dispersed in a dispersion medium, can be handled readily and is thus preferable for use. Examples of the dispersion medium include water, alcohols, cellosolves, glycols, etc., and silica microparticle dispersions, in which silica microparticles are dispersed in such dispersion mediums, are commercially available. Also, a silica microparticle powder may be used upon dispersing in such a dispersion medium.

In the case where aggregate microparticles (secondary microparticles), formed by the aggregation of a plurality of microparticles, are to be formed, the average diameter of the individual microparticles (primary microparticles) that form the aggregate microparticles shall be defined to be the average primary particle diameter.

If the microparticles are aggregates (chain aggregate microparticles) of microparticles that have aggregated in the form of unbranched chains or branched chains, since the respective microparticles become fixed with their aggregated state being maintained during film formation, the film becomes bulky, and the value of the uneven roughness of the film surface that is formed and the internal void percentage of the film become large in comparison to the case of using non-aggregated silica microparticles with the same average particle diameter as the average primary particle diameter of the chain aggregate microparticles.

Thus the chain aggregate microparticles may have an average primary particle diameter of less than 40nm, and chain aggregate microparticles with an average primary particle diameter of 10 to 100nm are used. The chain aggregate silica microparticles preferably have an average length (L) of 60 to 500nm and a ratio (L/d) of the average length (L) with respect to the average particle diameter (d) of 3 to 20. The surfaces of the silica microparticles are coated by the binder, and when viewed along a section in the thickness direction of the film, there is just one microparticle in the thickness direction uniformly or two to five microparticles are layered.

As the hydrolyzable silicon compound that is to be the binder raw material, a silicon alkoxide is favorable in terms of film strength and chemical stability. Among silicon alkoxides, a silicon tetraalkoxide and especially methoxide, ethoxide, propoxide, or butoxide is preferably used. Especially with a film in which the content of the binder component is made high, since the refractive index of the binder component will affect the reflectance, an oligomer of a silicon tetraalkoxide that is low in refractive index is most preferable. To use such an oligomer, the coating solution (low reflection solution) is adjusted to a pH of 1 to 5.

Also, a mixture of a plurality of types of silicon alkoxides may be used as the binder component. Besides silicon alkoxides, the hydrolyzable silicon compound is not restricted as long as a reaction product of Si (OH)$_4$ can be obtained by hydrolysis, and halogenated silicon compounds, silicon compounds having an isocyanate group, acyloxy group, aminoxyl group, etc. may be cited as examples.

As a specific example, a binder in this invention preferably contains one or a plurality of types of substances among (A) hydrolyzable alkoxysilanes, expressed by the Formula (1) below, and (B) silane compounds, expressed by the Formula (2) below, and oligomers thereof.

An above-mentioned(A)alkoxysilane thatisa hydrolyzable silicon compound is expressed by the following Formula (1):

$$R^4O- ((R^4O)_2\text{-Si-O})_n\text{-}R^4 \tag{1}$$

(Here, $R^4$ is an alkyl group with 1 to 4 carbon atoms, n = 1 to 20, and the structure of the condensate includes chain structures, branch structures, and cyclic structures.)

Also, an above-mentioned (B) silane compound is expressed by the Formula (2):

$$R^1{}_a R^2{}_b Si(OR^3){}_{4\text{-a-b}} \tag{2}$$

Here, $R^1$ is an alkyl group with 1 to 4 carbon atoms, an aryl group or a halogenated alkyl group with 6 to 12 carbon atoms, a methacryloxyalkyl group with 5 to 8 carbon atoms, or a ureidoalkylene group, alkylene glycol group, which is an alkyl group substituted by a glycidyloxy group and having an alkyl group at one terminal end, aromatic ureidoalkylene group, aromatic alkylene group, or mercaptoalkylene group with 2 to 10 carbon atoms, $R^2$ is an alkyl group, aryl group, alkenyl group, halogenated alkyl group, or halogenated aryl group with 1 to 6 carbon atoms, $R^3$ is a hydrogen atom or an alkyl group, acyl group, or alkylacyl group with 1 to 4 carbon atoms, a = 1, 2 or 3, b = 0, 1 or 2, and a + b = 1, 2 or 3. An above-described (A) alkoxysilane and/or (B) silane compound may be used upon further adding a (C) fluoroalkylsilane, expressed by the following Formula (3):

$$R^5{}_c R^6{}_d Si(OR^7){}_{4\text{-c-d}} \tag{3}$$

Here, $R^5$ is a fluorinated alkyl group with 1 to 12 carbon atoms, $R^6$ is an alkyl group, aryl group, alkenyl group, halogenated alkyl group, or halogenated aryl group with 1 to 6 carbon atoms, $R^7$ is a hydrogen atom or an alkyl group or acyl group with 1 to 4 carbon atoms, c = 1, 2 or 3, d = 0, 1 or 2, and c + d = 1, 2 or 3.

The solids weight ratio of the silica microparticles and the binder that form the low reflection layer is in the range of 30:70 to 95:5. If the binder amount is greater than this range, the microparticles become embedded in the binder, and since the uneven roughness value or void percentage in the film, which are due to the microparticles, become small, the antireflection effect is lessened. If the binder amount is less than the above range, the adhesive forces between the microparticles and the glass base material and between the microparticles themselves decrease and the mechanical strength of the film weakens. In consideration of the balance of reflectance and film strength, the solids weight ratio of silica microparticles to binder is more preferably 50:50 to 85:15. The binder is preferably coated onto the entire surfaces of the silica microparticles and the coating thickness is preferably 1 to 100nm and 2 to 9% of the above-described average particle diameter of the silica microparticles.

The coating solution for forming the low reflection layer is prepared by carrying out hydrolysis of the hydrolyzable silicon compound under the presence of the silicon microparticles, and the mechanical strength of the film that is obtained is thereby improved significantly. With the present invention, in which the above-described silicon compound is hydrolyzed under the presence of silica microparticles, a condensation reaction of the products resulting from hydrolysis and the silanol that exists on the microparticle surfaces occurs at substantially the same time as the hydrolysis, and since (1) the reactivity of the silica microparticle surfaces is thus improved by the condensation reaction with the binder components and (2) the silica microparticle surfaces become coated by the binder as the condensation reaction proceeds, the binder is used effectively to improve the adhesion of the silica microparticles with the resin base material.

On the other hand, if hydrolysis of the above-mentioned silicon compound is carried out in a state in which the silica microparticles do no exist, the binder components polymerize due to the condensation reaction of the hydrolysis products themselves. In the case where these polymerized binder components and the silica microparticles are mixed to prepare a coating solution, since (1) a condensation reaction between the binder components and the silica microparticles hardly occurs, the reactivity of the silica microparticle surfaces will be poor and (2) the silica microparticle surfaces will be hardly coated with the binder. Thus a large amount of binder components will be required to heighten the adhesion of the resin base material to the silica microparticles to the same degree as the adhesion of the binder to the silica microparticles.

In the present invention, the coating solution for the low reflection layer is prepared by mixing the silica microparticles, the hydrolyzable silicon compound, a catalyst for hydrolysis, a curing catalyst for promoting the condensation of silanol groups, water, and a solvent, and making hydrolysis occur. The reaction may be made to occur, for example, by stirring at room temperature for 1 hour to 24 hours, or the reaction may be made to occur by stirring at a temperature higher than room temperature, for example, $40°$ C to $80°$ C for 10 minutes to 50 minutes. The coating solution that is obtained may be diluted by an appropriate solvent in accordance to the subsequent coating method.

As the catalyst for hydrolysis, an acid catalyst is most effective, and mineral acids, such as hydrochloric acid, nitric acid, etc., and acetic acid, etc. can be cited as examples. The use of an acid catalyst is preferable since the condensation reaction rate will then be low in comparison to the rate of the hydrolysis reaction of the hydrolyzable silicon compound, that is, for example, a silicon alkoxide, and a large amount of M(OH)n, which is the hydrolysis reaction product and acts effectively as the binder, can be generated. With a basic catalyst, since the condensation reaction rate is high in comparison to the hydrolysis reaction rate, the metal alkoxide becomes a microparticulate reaction product or is used in the growth of the particle diameter of the silica microparticles that exist from the beginning, and consequently, the action of the metal alkoxide as a binder is lowered. The catalyst content, as a molar ratio with respect to the silicon compound that is to become the binder, is preferably 0.001 to 4.

The main reaction that occurs during the curing of the silicon compound that is the binder component in this invention is the condensation reaction of silanol groups, of the partially hydrolyzed silane compound, with each other (the silanol groups on the silica microparticle surfaces are also involved), and by the condensation reaction, curing occurs and the coating film also increases in density and increases in strength against external stress. The curing catalyst promotes this reaction efficiently.

Examples of the curing catalyst that promotes the above-mentioned condensation of silanol groups include chelate compounds, fatty acid salts, primary to tertiary amines, polyalkyleneamines, sulfonates, magnesium perchlorate, ammonium perchlorate, etc. These compounds may also be used in combination with an organic mercaptan or mercaptoalkylenesilane.

As examples of a chelate compound, compounds with which the central metal is Al, Zr, Co, Zn, Sn, Mn, V, Cu, Ce, Cr, Ru, Ga, Cd, or Fe and the coordination compound is acetylacetone, di-n-butoxide-mono-ethyl acetate, di-n-butoxide-mono-methyl acetate, methyl ethyl ketoxime, 2,4-hexanedione, 3,5-heptanedione, or aceto-oxime can be cited.

As examples of a fatty acid salt, metal salts of a fatty acid, such as 2-ethyl-hexyl acid, stearic acid, lauric acid, oleic acid, acetic acid, sebacic acid, dodecanoic diacid, propionic acid, brasylic acid, isobutyric acid, citraconic acid, diethyleneamine tetraacetic acid, etc., can be cited.

As more specific compounds of such chelate compounds and fatty acid salts, for example, sodium acetate and other alkali metal salts and ammonium salts of carbonic acids, aluminum acetylacetone and other metal salts and ammonium salts of acetylacetone, metal salts of ethyl acetoacetate, and metal salts coordinated with acetylacetone and ethyl acetoacetate can be cited.

Fatty amines, aromatic amines, and aminosilanes are preferable as the above-mentioned primary to tertiary amines. Examples include polymethylenediamine, polyetherdiamine, diethylenetriamine, iminobispropylamine, bishexamethylenetriamine, diethylenetriamine, tetraethylenepentamine, pentaethylenehexamine, dimethylaminopropylamine, aminoethylethanolamine, methyliminobispropylamine, N-aminomethylpiperazine, 1,3-diaminocyclohexane, isophoronediamine, metaxylenediamine, tetrachloroparaxylenediamine, metaphenylenediamine, 4,4'-methylenedianiline, diaminodiphenylsulfone, benzidine, toluidine, diaminodiphenyl ether, 4,4'-thiodianiline, 4,4'-bis(o-toluidine)dianisidine, o-phenylenediamine, 2,4-toluenediamine, methylene-bis(o-chloroaniline), bis(3,4-diaminophenyl)sulfone, 2,6-diaminopyridine, 4-chloro-o-phenylenediamine, 4-methoxy-6-methyl-m-phenylenediamine, m-aminobenzylamine, N,N,N',N'-tetramethyl-1,3-butanediamine, N,N,N',N'-tetramethyl-p-phenylenediamine, tetramethylguanidine, triethanolamine, 2-dimethylamino-2-hydroxypropane, N,N'-dimethylpiperazine, N,N'-bis[(2-hydroxy)propyl]piperazine, N-methylmorpholine, hexamethylenetetramine, pyridine, pyrazine, quinoline, benzyldimethylamine, $\alpha$-methylbenzyl methylamine, 2-(dimethylaminomethyl)phenol, 2,4,6-tris(dimethylaminomethylol)phenol, N-methylpiperazine, pyrrolidine, morpholine, N-$\beta$(aminoethyl)$\gamma$-aminopropyltrimethoxysilane, $\gamma$-aminopropyltrimethoxysilane, $\gamma$-aminopropyltriethoxysilane, N-$\beta$(aminoethyl)$\gamma$-aminopropylmethyldimethoxysilane, $\gamma$-aminopropylmethyldimethoxysilane, and $\gamma$-aminopropylmethyldiethoxysilane.

The curing catalyst is added at an amount in the range of 0.001 to 10 weight % of the weight of the low reflection solution remaining after curing.

The added amount of water necessary for the hydrolysis of the above-described silicon compound that is the binder component is preferably 0.1 to 100 as the molar ratio with respect to the silicon compound. When the added amount of water as the molar ratio is less than 0.1, the hydrolysis of the silicon compound is not promoted adequately, and a molar ratio exceeding 100 is not preferable in that the stability of the solution tends to become low (the molar ratio is calculated in terms of monomers (in the case of an oligomer)).

Though the above-mentioned solvent may basically be any solvent that practically dissolves the above-described silicon compound, an alcohol, such as methanol, ethanol, propanol, butanol, etc., a cellosolve, such as ethyl cellosolve, butyl cellosolve, propyl cellosolve, etc., or a glycol, such as ethylene glycol, propylene glycol, hexylene glycol, etc., is most preferable. Though depending as well on the amount of silica microparticles to be dispersed, when the concentration of the silicon compound to be dissolved in the above-mentioned solvent is too high, adequate voids cannot be formed between the above-mentioned microparticles in the film. The concentration is thus preferably set to 20 weight % or less and a concentration of 1 to 20 weight % is preferable.

By coating the above-described coating solution onto the resin base material and then leaving under room temperature or heating, the dehydration condensation reaction of the above-described silicon group compound hydrolysate and vaporization or combustion of the volatile components are carried out and a low reflection layer with an average thickness of 90nm to 350nm is formed on the resin base material.

Also for improving the adhesion property of the low reflection layer, the strength of the film, and the fixing ability of the microparticles, the binder and the silica microparticles must be polymerized two-dimensionally or three-dimensionally and the layer must undergo an interaction with the base material or the substrate layer. Though with the invention disclosed in Japanese Published Unexamined Patent Application No. 2001-278637, the above-mentioned two- to three-dimensional polymerization is achieved at a temperature of 200°C or more, a characteristic of the present invention is that a polymerization reaction is made to occur efficiently even at a low temperature (room temperature to 160°C) by selection of the curing catalyst.

As the above-mentioned coating method, a known art may be used and the method is not restricted in particular. For example, methods using a device, such as a spin coater, roll coater, spray coater, curtain coater, etc., immersion and drawing methods (dip coating methods), flow coating methods, and various printing methods, such as screen printing, gravure printing, curved surface printing, etc., may be used. Glycols are effective solvents, especially for a coating method requiring a high-boiling-point solvent, such as flexographic printing, gravure printing, or other printing method, and though the reasons are not clear, glycols restrain the aggregation of the microparticles and are favorable solvents for preparing a low reflection layer of low haze. A glycol is added to the coating solution so that its weight percentage is 5% or more and 80% or less.

Though depending on the resin base material, there may be cases where the above-described coating solution may be repelled and cannot be coated uniformly, this can be improved by performing washing or surface modification of the base material surface. As examples of methods of washing and surface modification, degreasing washing by an organic solvent, such as an alcohol, acetone, hexane, etc. , washing by a base or acid, methods of polishing the surface using an abrasive, ultrasonic wave washing, ultraviolet ray illumination treatment, ultraviolet ray ozone treatment, plasma treatment, etc., can be cited.

Heating treatment after coating is an effective method for improving the adhesion of the film, formed of the silica microparticles and the binder, with the resin base material. The treatment temperature is set from the room temperature or more to a temperature at which the resin base material will not be damaged, that is, for example, in the range of room temperature to 160°C, and the heating time is preferably set to a few seconds to a few hours. More preferably, heating at 70 to 130°C is carried out for 2 minutes to 1 hour.

A low reflection layer of this invention is formed on one surface or both surfaces of a resin base material. In cases where both surfaces of the resin base material is used facing a medium, such as air or a gas, that has a refractive index close to 1, a high antireflection effect can be obtained by forming films on both surfaces of the resin base material.

However, if one of the surfaces of the resin base material is used facing a medium with a refractive index that is close to the refractive index of the base material, for example, in the case of a laminated transparent plate, wherein the resin plate and a single glass plate are joined with a transparent resin layer, such as a layer of polyvinyl butyral, being interposed in between, since the reflection of visible light at the interface between the resin plate and the transparent resin layer can be neglected, it is adequate to form a lower reflection layer just at the outer surface of the resin plate without forming the low reflection layer at the resin plate surface facing the transparent resin layer.

2. Hard coat layer

As the hard coat solution, a silicon-acrylic-based ultraviolet curing type hard coat solution (hard coat solution a) and a heat curing type hard coat solution (hard coat solution b) are used.

The heat curing type hard coat solution (hard coat solution b) contains an (D) alkoxysilane of the Formula (4) indicated below and (E) colloidal silica.

The (D) alkoxysilane is expressed by the following Formula (4) :

$$R^8{}_a R^9{}_b Si (OR^{10})_{4-a-b} \qquad (4)$$

Here, $R^8$ is an alkyl group with 1 to 4 carbon atoms, an aryl group or halogenated alkyl group with 6 to 12 carbon atoms, a methacryloxyalkyl group with 5 to 8 carbon atoms, or a ureidoalkylene group, alkylene glycol group, which is an alkyl group substituted by a glycidyloxy group and having an alkyl group at one terminal end, aromatic ureidoalkylene group, aromatic alkylene group, or mercaptoalkylene group with 2 to 10 carbon atoms, $R^9$ is an alkyl group, aryl group, alkenyl group, halogenated alkyl group, or halogenated aryl group with 1 to 6 carbon atoms, $R^{10}$ is a hydrogen atom or an alkyl group, acyl group, or alkylacyl group with 1 to 4 carbon atoms, a = 1, 2 or 3, b = 0, 1 or 2, and a + b = 1, 2 or 3.

As the (E) colloidal silica, that with a particle diameter of 5 to 100nm is used.

The heat curing type hard coat solution contains 5 to 100 parts by weight of the (E) colloidal silica with respect to 100 parts by weight of the (D) alkoxysilane.

The above-mentioned hard coat solution b furthermore contains a hydrolysis catalyst, a curing catalyst, and a solvent. The above-mentioned hard coat solutions a and b may contain microparticles, with an average particle diameter of 0.05 to 10 μm, as necessary in order to provide a glare-proof property as shall be described later.

3. Intermediate layer

An intermediate layer may be provided to improve the adhesion property of the hard coat layer or the adhesion property of the low reflection layer. The following can be cited as a coating solution for such an intermediate layer.

An intermediate layer coating solution containing a polymer of an alkyl (meth) acrylate and an organosilicon compound, with the above-mentioned polymer of an alkyl (meth)acrylate being a homopolymer of an alkyl (meth) acrylate and the above-mentioned organosilicon compound being an organosilicon compound expressed by the following Formula (5):

$$R^{11}{}_{n}Si\,(R^{12})_{4-n} \tag{5}$$

Here, $R^{11}$ is an organic functional group, having a functional group selected from among the methacryloxy group, acryloxyl group, vinyl group, aryl group, and amino group, $R^{12}$ is one or a plurality of types of hydrolyzable groups selected from among alkoxyl group, acetoxyl group, and chlorine, and n is an organosilicon compound expressed by 1, 2 or 3. The above-mentioned organosilicon compound is also an alkoxysilane having a (meth)acrylic group.

Depending on the case, a copolymer of a (meth)acrylic monomer, having an alkoxysilyl group, and an alkyl (meth)acrylate may be used in place of the above-described polymer of an alkyl (meth)acrylate. The blend ratio of the (meth)acrylic monomer, having an alkoxysilyl group, with respect to 100 parts by weight of the alkyl (meth)acrylate polymer (or copolymer) is 1 to 70 parts by weight and preferably 2 to 40 parts by weight. The above-mentioned intermediate layer coating solution contains a solvent, also contains a methylol melamine, which is alkyl-etherified partially or entirely, and, depending on the case, furthermore contains at least one of either of an ultraviolet absorbing agent and a surfactant for improving the coating property. By making an ultraviolet absorbing agent be contained, the ultraviolet transmittance can be lowered without lowering the transmittance in the visible range.

4. Glare-proof layer

In order to provide a glare-proof property to the low reflection treated article obtained by this invention, the hard coat layer or the intermediate layer may be made to contain microparticles with an average particle diameter of 0.05 μm (50nm) to 10 μm.

As the microparticles with an average particle diameter of 0.05 μm to 10 μm, microparticles formed of a metal or inorganic compound are used favorably. These microparticles more preferably has an average particle diameter of 2 to 10 μm and even more preferably has an average particle diameter of 4 to 8 μm. By the addition of these microparticles, especially in display applications, the appearance of the surrounding light can be alleviated and the image display becomes clear.

As examples of the material of the above-mentioned glare-proof property adding microparticles, formed of a metal or inorganic compound, Si, Al, Sn, Sb, Ta, Ce, La, Fe, Zn, W, In, Ti, Mg, and their oxides and complex oxides, as well as $CaCO_3$, $BaSO_4$, etc., may be cited. One type of such a metal or inorganic compound may be used solitarily or two or more types may be used in combination. Among these $SiO_2$ is most preferable.

These glare-proof property adding microparticles may be surface modified with an organosilane compound or an organic compound to improve their dispersion property in a solvent. As an organosilane compound, an organosilane compound given as an example for surface modification of colloidal silica, and especially a monofunctional silane, is preferably used.

These glare-proof property adding microparticles are preferably spherical and the more spherical, the more preferable, and may be hollow particles or porous particles. Also, the refractive index thereof is preferably the same or smaller than the refractive index of the light-cured matter of the hard coat solution that remains after removal of the above-described microparticles. Interference non-uniformity due to film thickness non-uniformity can thereby be reduced more readily.

5. Base material resin and hydrophilization treatment of its surface

Though it is sufficient that the resin base material is a base material formed of a synthetic resin that forms a board, a film or sheet and the type of synthetic resin is not restricted in particular, a transparent resin, such as an acrylic resin, methacrylic resin, polycarbonate resin, polyethylene resin, polypropylene resin, cyclic-olefin-containing resin, polyethylene terephthalate resin, polystyrene resin, triacetyl cellulose resin, styrene - methyl methacrylate copolymer resin, etc., is preferably used.

Though the surface of the synthetic resin must be subject to a hydrophilization treatment and be improved in adhesion with the coating layer, basically, any treatment that can hydrophilize the resin surface will do. For example, a corona discharge treatment, plasma treatment, UV ozone treatment, ozone water washing, organic peroxide treatment or other treatment by which the surface is oxidized is employed. By performing this process, the adhesion property is improved in particular. Furthermore, organic matter on the surface can be removed.

As the surface state of the resin that is to be targeted, the surface needs to be put in a state in which the water drop contact angle is 60° or less, and when the atomic composition of the surface in such a state is observed by XPS, the surface is found to be higher in oxygen amount than it was prior to the hydrophilization treatment, and this oxygen is introduced in the form of hydroxyl groups, carbonyl groups, and carboxyl groups at just vicinity of the resin surface. By these functional groups becoming binding site with the coating film, a coating film of good adhesion property can be formed. If the oxygen to carbon ratio (O/C) at the resin surface in this state is 0.08 or more, a coating film of even better adhesion property can be formed.

Also, as a special type of resin, there is the styrene - methyl methacrylate copolymer resin. This styrene - methyl methacrylate copolymer resin has both the good forming properties, low water absorption, and high refractive index of polystyrene and the high transparency, weathering properties, and high hardness of polymethyl methacrylate (acrylic resin). This resin is classified into grades (MS600, MS300, MS200, etc.) according to the copolymerization ratio of styrene and methyl methacrylate.

However, there is the disadvantage that due to containing the characteristics of styrene, the property of adhesion with the coating film cannot be obtained with a normal surface treatment solution when surface treatment of this styrene - methyl methacrylate copolymer resin base material is to be performed.

Thus by coating the styrene - methyl methacrylate resin base material with a surface treatment solution, containing a solvent, having a benzene ring and a hydroxyl group in its structure, such as benzyl alcohol, the adhesion of the coating film of the low reflection layer of this invention can be improved.

In this case, in order to maintain the adhesion property of the respective layers prior to curing, it is preferable for the benzyl alcohol or a substance having a similar structure to be contained, as a part or entirety of the solvent, and normally as an additive to the solvent in each of the heat curing type hard coat layer coating solution, the UV curing type hard coat layer coating solution, the intermediate layer coating solution, and the low reflection layer coating solution.

As examples of benzyl alcohol or solvent having a similar structure, substances having a benzene ring and a hydroxyl group in the structure can be cited, and the following solvents can be cited.

Benzyl alcohol, p-nitrobenzyl alcohol, p-hydroxyphenethyl alcohol, 2-phenoxyethanol, dimethyl benzyl carbinol, β-phenylethyl alcohol, phenol, 2-amino-4-chlorophenol, aminophenol (o, m, p), benzoic acid, anthranilic acid, isophthalic aid, p-ethylphenol, methyl p-oxybenzoate, p-octylphenol, catechol, xylenolic acid, guaiacol, guethol, cresol, salicylic acid, 2,6-dichloro-4-aminophenol, 2,4-dinitrophenol, 2,4,6-tris(dimethylaminomethyl)phenol, 2,3,5-trimethylhydroquinone, p-hydroxybenzoic acid, 5-hydroxyisophthalic acid, p-hydroxyphenyl acetic acid, p-hydroxyphenyl acetic acid methyl ester, p-hydroxyphenyl propionic acid, hydroxypropiophenone, hydroxybenzaldehyde, 2-t-butylhydroquinone, p-t-butylphenol, fluoroglycinol, resorcine, isoeugenol, ethyl vanillin, eugenol, cinnamic alcohol, methyl salicylate, terpineol, vanillin.

Also, a surface treatment solution, in which the contained amount of the above-mentioned benzyl alcohol or solvent with similar structure is 20 parts by weight to 0.01 parts by weight with respect to 100 parts by weight of the entire solution, is preferable in terms of adhesion with the base material and stability of the surface treatment solution.

In addition to the above-described basic composition, a compound of n = 1.40 or less is added as a refractive index adjuster to the low reflection layer solution. Specifically, a fluorinated silicon compound that is surface treated with a silane coupling agent, etc., or an untreated fluorinated silicon compound or a fluorinated silicon compound that is dispersed in a solvent is added at a proportion of 0.1 to 110 parts by weight of the fluorinated silicon compound solids with respect to 100 parts by weight of solids of the low reflection solution.

Other fluorine compounds that can be used as a refractive index adjuster include $MgF_2$ (n = 1.38), $Na_2AlF_6$ (n = 1.38), and $CaF_2$ (n = 1.20 to 1.30).

When this invention's low reflection resin article is to be used in an automotive application, the resin base material that is coated with the low reflection layer may furthermore be coated on its surface with a water repellent coating film or anti-fogging coating film. By coating with a water repellent film, water repellency is provided, and for cases where dirt becomes attached, the dirt removal property can be improved further. The water repellency that is obtained by coating a water repellent coating film on top of this invention's low reflection layer is excellent in comparison to the water repellency obtained by treating an untreated resin base material surface with the same water repellent agent. Also, by coating with an anti-fogging coating film, anti-fogging performance is provided, and for cases where dirt becomes attached, the dirt removal property can be improved.

Low reflection layers may be coated onto the surfaces at both sides of a resin base material and water repellent coating films may be coated further on top, or a low reflection layer may be coated onto the surface at one side of a resin base material and a water repellent coating film or films may be coated onto either or both of the low reflection layer and untreated resin base material surface.

Likewise, low reflection layers may be coated onto the surfaces at both sides of a resin base material and anti-fogging coating films may be coated further on top, or a low reflection layer may be coated onto the surface at one side of a resin base material and an anti-fogging coating film or films may be coated onto either or both of the low reflection layer and untreated resin base material surface.

Or, preferably, low reflection layers are coated onto the surfaces at both sides of a resin base layer, an anti-fogging coating film is coated onto the surface of the above-mentioned film at one side (interior side of a vehicle or indoor side), and a water repellent coating film is coated onto the above-mentioned layer film surface at the other side (outer side of a vehicle or outdoor side), or preferably a low reflection layer is coated onto the surface of the resin base material at just one side (interior side of a vehicle or indoor side), an anti-fogging coating film is coated onto the surface of the above-mentioned film, and a water repellent coating film is coated onto the surface of the above-mentioned resin base material at the other side (outer side of a vehicle or outdoor side). Even when the above-mentioned anti-fogging coating film and water repellent film are coated on top of the low reflection layer, the reflectance hardly changes and a low reflectance is maintained.

This invention's low reflection resin article may be used as a window of an automobile, train, or other vehicle, with which transparency, visibility, and prevention of appearance of reflected images of objects inside the vehicle are required in particular; as a building window, show window, frontal resin substrate of an image display device, or optical resin part; as a frontal resin substrate of a solar water heater; as a solar cell resin substrate, such as a frontal resin substrate of a solar cell panel, a solar cell panel resin substrate, etc.

This invention's low reflection resin article may furthermore be used as the frontmost surface of a display (notebook type personal computer, monitor, PDP, PDA), the frontmost surface of a touch panel monitor, a cellular phone window, pickup lens, optical lens, eyeglass lens, optical filter, end surface of an optical part, transparent part for a vehicle (headlamp cover, window), non-transparent part of a vehicle (instrument panel surface), meter cover, etc.

Though a low reflection article can be obtained by directly coating this invention's coating solution onto the resin base material, a low reflection article can also be obtained by adhering a transparent or non-transparent resin sheet or film, onto which this invention's low reflection layer has been coated, onto a glass base material or any of various other base materials.

Best Mode for Carrying out the Invention

Though examples of this invention shall now be described in detail, this invention is not limited to these examples. For the following examples and comparative examples, optical characteristics were evaluated in accordance to JIS-R3106, and an attachment property test, evaluations of resistance to scuffing, contact angle, and optical characteristics (visible ray reflectance, visible ray transmittance, transmittance at 350nm, and haze percentage) were evaluated by the following methods.

(a) Attachment property test

This test was carried out in compliance to the cross cut test of JIS K5400. In this method, after adhering cellophane tape, made by Nichiban Co., Ltd., onto a coating film, the tape is removed briskly. Prior to performing a humidity resistance test (initial state) and after performing the humidity resistance test (10 days inside a tank set to 50°C and 95%RH), the adhesion property (ease of adhesion) and the resistance against moisture permeation of each coating film was evaluated and the attachment property was judged by the number of meshes, among 100 meshes of hard coat coating film, that became peeled.

Number of meshes that became peeled : 0 -----"no peeling"
Number of meshes that became peeled: 1 to 5 -----"peeled at only a very small part"
Number of meshes that became peeled : 6 to 50 -----"peeled partially"
Number of meshes that became peeled : 51 to 99 ----- "peeled greatly"
Number of meshes that became peeled : 100 ----------- "peeled entirely"

(b) Resistance to scuffing (flawing property)

The sample surface was rubbed across 10 reciprocations with a cotton cloth at a load of 250/cm$^2$ and the flawing of the surface was judged visually. The following four stages were used as the judgment criteria:

1 ... Flaws reach the base material and numerous flaws are seen with transmitted light.

2 ... Five or more flaws are seen with reflected light and a few flaws are seen with transmitted light as well.

3 ··· Five or more flaws are seen when the low reflection layer is viewed with reflected light.

4 ··· A few flaws are seen with reflected light.

5 ··· No flaws are seen at all.

(c) Contact angle measurement: The contact angle with respect to a 0.1cc drop of pure water was measured. A higher contact angle indicates a higher stain-proof property.

(d) Measurement of optical characteristics: The visible ray reflectance (%) and transmittance (%) were measured in compliance to JIS 3212, and the transmittance (%) for light of a wavelength of 350nm and the haze value (clouding value) were measured in compliance to JIS K7105-1981.

1. Treatment of UV curing type hard coat solutions

1-1 UV curing type hard coat solution 1

Tests were performed upon obtaining MP-1175UV (made by SDC Coatings. Inc.) as a commercially available ultraviolet curing type hard coat solution.

The above-mentioned hard coat solution was coated on by the spinner method so that the film thickness after curing will be 3 to 5 $\mu$m, and the coating film was thereafter cured by illuminating for approximately 10 seconds with an ultraviolet lamp with an output of 120W/cm so that the total ultraviolet ray illumination energy will be approximately 800 (mJ/cm$^2$).

The film thickness after curing was measured using a surface roughness analyzer (Surf com 110B, made by Tokyo Seimitsu Co., Ltd.). The total ultraviolet ray illumination energy value was measured using an integrating photometer (Type: UIT-102, made by Ushio Inc.).

1-2 UV curing type hard coat solution 2 (for adding glare-proof property)

0.8g of silica microparticles with an average particle diameter of 6 $\mu$m were added to and dispersed uniformly by stirring in 100g of MP-1175UV (made by SDC Coatings. Inc.).

The hard coat solution was coated with a bar coater so that the film thickness after curing will be 4 $\mu$m, and the coating film was thereafter cured by illuminating for approximately 10 seconds with an ultraviolet lamp with an output of 120W/cm so that the total ultraviolet ray illumination energy will be 300 (mJ/cm$^2$).

2. Treatment of heat curing type hard coat solutions

2-1 Heat curing type hard coat solution 1

After reacting 150g of a silica microparticle dispersion (average particle diameter: 50nm; standard deviation of particle diameter: 1.4; average value of the ratio of the major axis length to the minor axis length: 1.1; percent solids: 20%; Snowtex OL, made by Nissan Chemical Industries, Ltd.) with 183g of methyltrimethoxysilane, 508g of isopropyl alcohol, 140g of n-butanol, 18g of acetic acid, and 1g of sodium acetate were added, and after making the mixture uniform by stirring, 0.1g of Paintad 32 (made by Dow Corning Asia Ltd.) , which is a coating film appearance improving (leveling) agent, were added and stirring was performed to obtain a heat curing type hard coat solution 1.

2-2 Heat curing type hard coat solution 2 (addition of benzyl alcohol to a heat curing type hard coat solution)

After reacting 150g of a silica microparticle dispersion (average particle diameter: 50nm; standard deviation of particle diameter: 1.4; average value of the ratio of the major axis length to the minor axis length: 1.1; percent solids: 20%; Snowtex OL, made by Nissan Chemical Industries, Ltd.) with 183g of methyltrimethoxysilane, 508g of isopropyl alcohol, 140g of normal butanol, 18g of acetic acid, and 1g of sodium acetate were added, and after making the mixture uniform by stirring, 0.1g of the above-mentioned Paintad 32 (made by Dow Corning AsiaLtd.) were added and stirring was performed, and thereafter, 10g (5 weight % with respect to the solution weight) of benzyl alcohol were added and stirring was performed to obtain a heat curing type hard coat solution 2.

3. Treatment of intermediate layer solutions

3-1. Intermediate layer solution 1

While maintaining a mixture of 400g of ethyl cellosolve, 160g of methyl methacrylate, and 40g of γ-methacryloxypropyltrimethoxysilane at 75°C under a nitrogen atmosphere, a solution, in which 1g of benzoyl peroxide were dissolved in 200g of ethyl cellosolve, was added over a period of 2 hours, and then the mixture was kept at 75°C for another 6 hours. Thereafter, 1400g of ethyl cellosolve, 2g of a 10% aqueous solution of ammonium perchlorate, 100g of 2,2'-dihydroxy-4-methoxybenzophenone, which is to serve as an ultraviolet absorbing agent, and 0.2g of Paintad 19 (made by Dow Corning Asia Ltd.), which is a coating film appearance improving (leveling) agent, were added and stirring was performed to obtain a heat curing type intermediate layer solution.

3-2. Intermediate layer solution 2 (addition of benzyl alcohol to an intermediate layer solution)

While maintaining a mixture of 400g of ethyl cellosolve, 160g of methyl methacrylate, and 40g of γ-methacryloxypropyltrimethoxysilane at 75°C under a nitrogen atmosphere, a solution, in which 1g of benzoyl peroxide were dissolved in 200g of ethyl cellosolve, was added over a period of 2 hours, and then the mixture was kept at 75°C for another 6 hours. Thereafter, 1400g of ethyl cellosolve, 2g of a 10% aqueous solution of ammonium perchlorate, 100g of 2,2'-dihydroxy-4-methoxybenzophenone, which is to serve as an ultraviolet absorbing agent, and 0.2g of the above-mentioned Paintad 19 (made by Dow Corning Asia Ltd.) were added and stirring was performed, and then 200g of benzyl alcohol were added and stirring was performed to obtain a heat curing type intermediate layer solution.

4. Treatment of low reflection layer solution

4-1. Low reflection layer solution 1

While stirring 38g of a silica microparticle dispersion (average particle diameter: 50nm; standard deviation of particle diameter: 1.4; average value of the ratio of the major axis length to the minor axis length: 1.1; percent solids: 20%; Snowtex OL, made by Nissan Chemical Industries, Ltd.), 12g of water, 20g of propylene glycol monomethyl ether, and 1g of concentrated hydrochloric acid were added, and after then adding 8. 7g of tetraethoxysilane and stirring for 2 hours, the mixture was left still to react for 24 hours. Thereafter, 164g of propylene glycol monomethyl ether were added and then after further adding sodium acetate as a curing catalyst, stirring was performed to make the solution uniform. Thereafter 4g of the above-mentioned Paintad 19 (made by Dow Corning Asia Ltd.) were added to obtain a low reflection layer solution 1.

4-2. Low reflection layer solution 2

While stirring 38g of a silica microparticle dispersion (average particle diameter: 50nm; standard deviation of particle diameter: 1.4; average value of the ratio of the major axis length to the minor axis length: 1.1; percent solids: 20%; Snowtex OL, made by Nissan Chemical Industries, Ltd.), 12g of water, 20g of propylene glycol monomethyl ether, and 1g of concentrated hydrochloric acid were added, and after then adding 6.3g of the tetraethoxysilane oligomer, "Ethyl Silicate 40" (average degree of polymerization n = 5, made by Colcoat Co., Ltd.), and stirring for 2 hours, the mixture was left still to react for 24 hours. Thereafter, 164g of propylene glycol monomethyl ether were added and then after further adding sodium acetate as a curing catalyst, stirring was performed to make the solution uniform. Thereafter 4g of the above-mentioned Paintad 19 (made by Dow Corning Asia Ltd.) were added to obtain a low reflection layer solution 2.

4-3. Low reflection layer solution 3

While stirring 19g of a silica microparticle dispersion (average particle diameter: 70nm; standard deviation of particle diameter: 1.3; average value of the ratio of the major axis length to the minor axis length: 1.1; percent solids: 40%; Snowtex YL, made by Nissan Chemical Industries, Ltd.), 31g of water, 20g of ethyl cellosolve, and 1g of concentrated hydrochloric acid were added, and after then adding 6.3g of the tetraethoxysilane oligomer, "Ethyl Silicate 48" (average degree of polymerization n = 8, made by Colcoat Co., Ltd.), and stirring for 2 hours, the mixture was left still to react for 24 hours. Thereafter, 164g of propylene glycol monomethyl ether were added and then after further adding sodium acetate as a curing catalyst, stirring was performed to make the solution uniform. Thereafter 4g of FZ-2105 (made by Nippon Unicar Co. , Ltd.) were added as a conductive surfactant to obtain a low reflection layer solution 3.

4-4. Low reflection layer solution 4

While stirring 50g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co., Ltd.) , 20g of propylene glycol monomethyl ether and 1g of concentrated hydrochloric acid were added, and after then adding 5.3g of the tetraethoxysilane oligomer, "Ethyl Silicate 48" (average degree of polymerization n = 8, made by Colcoat Co., Ltd.), and stirring for 2 hours, the mixture was left still to react for 24 hours. Thereafter, 164g of propylene glycol monomethyl ether were added and then after further adding sodium acetate as a curing catalyst, stirring was performed to make the solution uniform. Thereafter 4g of FZ-2105 (made by Nippon Unicar Co. , Ltd.) were added as a conductive surfactant to obtain a low reflection layer solution 4.

4-5. Low reflection layer solution 5

While stirring 50g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co. , Ltd.), 20g of propylene glycol monomethyl ether and 1g of concentrated nitric acid were added, and after then adding 6.3g of the tetraethoxysilane oligomer, "Ethyl Silicate 40" (made by Colcoat Co., Ltd.), and stirring for 2 hours, the mixture was left still to react for 24 hours. Thereafter, 164g of propylene glycol monomethyl ether were added and then after further adding aluminum acetylacetone as a curing catalyst, stirring was performed to make the solution uniform. Thereafter 4g of the above-mentioned Paintad 19 (made by Dow Corning Asia Ltd.) were added to obtain a low reflection layer solution 5.

4-6. Low reflection layer solution 6

While stirring 50g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co., Ltd.), 20g of propylene glycol monomethyl ether and 1g of concentrated hydrochloric acid were added, and after then adding 6.3g of the tetraethoxysilane oligomer, "Ethyl Silicate 40" (made by Colcoat Co., Ltd.), and stirring for 2 hours, 1.1g of perfluorooctylethyltrimethoxysilane were added as a water repellency adding component, stirring was performed for 2 hours, and then the mixture was left still to react for 24 hours. Thereafter, 164g of propylene glycol monomethyl ether were added and then after further adding aluminum acetylacetone as a curing catalyst, stirring was performed to make the solution uniform. Thereafter 4g of the above-mentioned Paintad 19 (made by Dow Corning Asia Ltd.) were added to obtain a low reflection layer solution 6.

4-7. Low reflection layer solution 7

While stirring 40g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co., Ltd.) , 20g of propylene glycol monomethyl ether and 1g of concentrated hydrochloric acid were added, and after then adding 11g of a copolymer of tetramethoxysilane and tetraethoxysilane (EMS-485, average degree of polymerization n = 8, the functional groups of the silicate are a composite of 50% methoxy groups and 50% ethoxy groups; made by Colcoat Co., Ltd.), and stirring for 2 hours, the mixture was left still to react for 24 hours. Thereafter, 164g of propylene glycol monomethyl ether were added and then after further adding aluminum acetylacetone as a curing catalyst, stirring was performed to make the solution uniform. Thereafter 4g of the above-mentioned Paintad 19 (made by Dow Corning Asia Ltd.) were added to obtain a low reflection layer solution 7.

4-8. Low reflection layer solution 8

While stirring 35g of a hollow silica dispersion sol (average particle diameter: 33nm; percent solids: 20%; ELCOM V-8203, made by Catalysts & Chemicals Ind. Co., Ltd.), 6g of water were added, and after then adding 73g of the tetramethoxysilane oligomer, "MSH4" (nonvolatile component: 21%; made by Mitsubishi Chemical Corporation), and stirring for 1 hour, the mixture was left still to react for 24 hours. Thereafter, 840g of isopropyl alcohol were added and then after further adding aluminum acetylacetone as a curing catalyst, stirring was performed to make the solution uniform and a low reflection layer solution 8 was thereby obtained.

4-9. Low reflection layer solution 9

While stirring 65g of a hollow silica dispersion sol (average particle diameter: 33nm; percent solids: 20%; ELCOM V-8203, made by Catalysts & Chemicals Ind. Co., Ltd.), 3g of water were added, and after then adding 36g of the tetramethoxysilane oligomer, "MSH4" (nonvolatile component: 21%; made by Mitsubishi Chemical Corporation), and stirring for 1 hour, the mixture was left still to react for 24 hours. Thereafter, 840g of isopropyl alcohol were added and then after further adding aluminum acetylacetone as a curing catalyst, stirring was performed to make the solution uniform and a low reflection layer solution 9 was thereby obtained.

4-10. Low reflection layer solution 10

While stirring 56g of a chain-like aggregated silica microparticle dispersion (average primary particle diameter: 25nm; average length: 100nm; percent solids: 15%; Snowtex OUP, made by Nissan Chemical Industries, Ltd.), 20g of ethanol and 1g of concentrated hydrochloric acid were added, and after then adding 5.2g of tetraethoxysilane and stirring for 2 hours, the mixture was left still to react for 24 hours. Thereafter, 164g of propylene glycol monomethyl ether were added and then after further adding aluminum acetylacetone as a curing catalyst, stirring was performed to make the solution uniform. Thereafter 4g of the above-mentioned Paintad 19 (made by Dow Corning Asia Ltd.) were added to obtain a low reflection layer solution 10.

4-11. Low reflection layer solution 11 (without monomer + curing catalyst)

While stirring 50g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co., Ltd.), 20g of propylene glycol monomethyl ether and 1g of concentrated nitric acid were added, and after then adding 8.6g of Ethyl Silicate 28 (trade name of tetraethoxysilane made by Colcoat Co. , Ltd.), and stirring for 2 hours, the mixture was left still to react for 24 hours. Thereafter, 164g of propylene glycol monomethyl ether were added and stirring was performed to make the solution uniform. Thereafter 4g of the above-mentioned Paintad 19 (made by Dow Corning Asia Ltd.) were added to obtain a low reflection layer solution 11.

4-12. Low reflection layer solution 12 (addition of benzyl alcohol to low reflection layer solution 5)

While stirring 50g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co., Ltd.), 20g of propylene glycol monomethyl ether and 1g of concentrated nitric acid were added, and after then adding 6.3g of Ethyl Silicate 40 (made by Colcoat Co., Ltd.), and stirring for 2 hours, the mixture was left still to react for 24 hours. Thereafter, 164g of propylene glycol monomethyl ether were added and aluminum acetylacetone were further added as a curing catalyst, then stirring was performed to make the solution uniform. Thereafter 4g of the above-mentioned Paintad 19 (made by Dow Corning Asia Ltd.) were added and then 2.4g of benzyl alcohol were added and stirring was performed to obtain a low reflection layer solution 12.

4-13. Low reflection layer solution 13 (modification of low reflection layer solution 8)

While stirring 56g of a chain-like aggregated silica microparticle dispersion (average primary particle diameter: 25nm; average length: 100nm; percent solids: 15%; Snowtex OUP, made by Nissan Chemical Industries, Ltd.), 20g of ethanol and 1g of concentrated hydrochloric acid were added, and after then adding 5.2g of tetraethoxysilane and stirring for 2 hours, the mixture was left still to react for 24 hours. Thereafter, 5.0g of powder-form calcium fluoride, for decreasing the refractive index of the film, were added and dispersed uniformly. Thereafter, 164g of propylene glycol monomethyl ether were added to dilute the mixture and then after adding magnesium perchlorate as a curing catalyst, stirring was performed to make the solution uniform. Thereafter 4g of the above-mentioned Paintad 19 (made by Dow Corning Asia Ltd.) were added to obtain a low reflection layer solution 13.

4-14. Low reflection layer solution 14 (modification of low reflection layer solution 8)

While stirring 50g of a silica microparticle dispersion (average particle diameter: 110nm; standard deviation of particle diameter: 1.3; average value of the ratio of the major axis length to the minor axis length: 1.03; percent solids: 15%; Seahostar KE-W10, made by Nippon Shokubai Co., Ltd.), 20g of propylene glycol monomethyl ether and 1g of concentrated nitric acid were added, and after then adding 6.3g of Ethyl Silicate 40 (made by Colcoat Co., Ltd.),

and stirring for 2 hours, the mixture was left still to react for 24 hours. Thereafter, 10.0g of powder-form calcium fluoride, for decreasing the refractive index of the film, were added and dispersed uniformly. Thereafter, 164g of propylene glycol monomethyl ether were added to dilute the mixture and then after further adding aluminum acetylacetone as a curing catalyst, stirring was performed to make the solution uniform. Thereafter 4g of the above-mentioned Paintad 19 (made by Dow Corning Asia Ltd.) were added to obtain a low reflection layer solution 14.

With each of the above-described low reflection solutions 1 to 14, coating by spin coating followed by heating at 80 to 120°C for a predetermined time of 15 to 30 minutes were performed, and the reflectance of the obtained low reflection layer (film thickness: 110nm) was measured.

5. Water repellency treatment solution

99g of propylene glycol monomethyl ether were added to 1g of perfluorooctylethyltrimethoxysilane, and while stirring, 0.5g of pure water were added, 1g of acetic acid were added further, and then stirring was continued until the solution became transparent. Thereafter 900g of ethanol were added and stirring was performed to prepare a water repellency treatment solution.

In regard to the treatment method, a cotton cloth was soaked with a few milliliters of the water repellency treatment solution, the surface to be treated was rubbed with this cloth and the excess amount of treatment solution was removed to obtain a water repellency treated surface.

6. Resin base materials used

Polymethylmethacrylate (PMMA) (trade name: Acrylite, made by Mitsubishi Rayon Co., Ltd. ; visible ray transmittance = 92.5%; visible ray reflectance = 7.0%)
Polycarbonate (PC) (trade name: Polyca-ace, Product No.: ECK-100, made by Tsutsunaka Plastic Industry Co. , Ltd. ; visible ray transmittance = 88%; visible ray reflectance = 8.3%)
Cycloolefin polymer (COP) (trade name: ZEONOR, Product No.: 1600, made by Nippon Zeon Corporation, visible ray transmittance = 92%; visible ray reflectance = 7.5%)

For COP, the following hydrophilization treatment was carried out. Using the corona discharge surface modifying device, "Corona Master" Type PS-1M, made by Shinko Electric & Instrumentation Co., Ltd., a variable-voltage corona discharge treatment of a maximum output of approximately 14000 volts and a frequency of approximately 15kHz was performed at a rate of 20mm per second. Whereas the water drop contact angle of the COP base material surface was 90 degrees prior to the hydrophilization treatment, the water drop contact angle of the surface after treatment was 45 degrees.

Styrene -methyl methacrylate copolymer resin (trade name : MS600, made by Nippon Steel Chemical Group)

The heating temperatures and times after the coating on of the above-described low reflection layer solutions 1 to 14, heat curing type hard coat solutions 1 and 2, and intermediate layer solutions 1 and 2 were set as shown in the following Table 1 in accordance to the type of resin base material used.

[Table 1]

| Base material | Low reflection layer solutions 1 to 14 | | Heat curing type hard coat solutions 1 and 2 | | Intermediate layer solutions 1 and 2 | |
|---|---|---|---|---|---|---|
| PMMA | 80°C, | 30 minutes | 80°C, | 2 hours | - | |
| PC | 120°C, | 15 minutes | 120°C, | 1 hours | 110°C, | 30 minutes |
| COP | 120°C, | 15 minutes | 120°C, | 15 minutes | 110°C, | 30minutes |
| MS600 | 80°C, | 30 minutes | 80°C, | 2 hours | 80°C, | 1 hours |

Examples

(Example 1)

The above-described low reflection layer solution 1 was coated onto both surfaces of the PMMA resin base material (without surface treatment), and by placing in an electric oven set at 80°C for 30 minutes, a resin plate coated with low reflection layers, each with an average film thickness of 110nm, was obtained. The results of the above-described characteristics tests for the resin plate with low reflection layers that was obtained are shown in Table 2 and Table 3.

(Examples 2 to 10, 28, and 29)

Except for using the low reflection layer solutions 2 to 10 and 12 to 14 as shown in Table 2 in place of the low reflection layer solution 1 used in Example 1, resin plates coated with low reflection layers were obtained in the same manner as in Example 1. The results of the above-described characteristics tests for the resin plates with low reflection layers that were obtained are shown in Table 2 and Table 3.

(Examples 11 and 15)

The above-described heat curing type hard coat solution 1 was coated onto both surfaces of the PMMA resin base material (without surface treatment), and by placing in an electric oven set at 80°C for 30 minutes, hard coat layers (first layers) were formed. Low reflection layer solution 5 was then coated on top of these hard coat layers, and by placing in an electric oven set at 80°C for 30 minutes, a resin plate coated with low reflection layers (second layers), each with an average film thickness of 110nm, was obtained (Example 11). A surface of this resin plate was subject to the water repellency treatment (Example 15). The results of the above-described characteristics tests for the resin plates with low reflection layers that were obtained are shown in Table 2 and Table 3.

(Examples 12 to 14, 20, 21, and 23 to 26)

Except for using the resin base materials (PMMA, PC, COP, MS600), first layer solutions (UV curing type hard coat solutions 1 and 2, intermediate layer solutions 1 and 2), and second layer solutions (low reflection layer solutions 4 to 6, 8, and 9), which are respectively shown in Table 2, in place of the resin base material, first layer solution, and second layer solution used in Example 11, resin plates coated with low reflection layers were obtained in the same manner as in Example 1. The results of the above-described characteristics tests for the resin plates with low reflection layers that were obtained are shown in Table 2 and Table 3.

(Examples 19 and 22)

The above-described intermediate layer solution 1 was coated onto both surfaces of the resin base material PC (Example 19) and the COP base material (Example 22), and by placing in an electric oven set at 110°C for 30 minutes, intermediate layers (first layers) were formed. Heat curing type hard coat solution 1 was then coated on top of these intermediate layers, and by placing in an electric oven set at 120°C for 1 hour, hard coat layers (second layers) were formed. Low reflection layer solution 5 was then coated on top of these hard coat layers, and by placing in an electric oven set at 120°C for 15 minutes, resin plates coated with low reflection layers (third layers) were obtained. The results of the above-described characteristics tests for the resin plates with low reflection layers that were obtained are shown in Table 2 and Table 3.

(Example 27)

Except for using MS600 and low reflection layer solution 12 respectively in place of the resin base material and low reflection layer solution used in Example 1, a resin plate coated with low reflection layers was obtained in the same manner as in Example 1. The results of the above-described characteristics tests for the resin plate with low reflection layers that was obtained are shown in Table 2 and Table 3.

(Comparative Example 1)

Except for using low reflection layer solution 11, shown in Table 2, in place of low reflection layer solution 1 used in Example 1, a resin plate coated with low reflection layers was obtained in the same manner as in Example 1. The results of the above-described characteristics tests for the resin plate with low reflection layers that was obtained are shown in Table 2 and Table 3.

Table 2 and Table 3 show that all of the low reflection layer coated resin plates obtained in Examples 1 to 29 exhibited "no peeling" in the attachment property test, have low visible ray reflectances of 0.8 to 1.6% and scuffing resistances of 3 or higher, and thus exhibit excellent antireflection performance and excellent scuffing resistance. Furthermore, the low reflection layer coated resin plates obtained in Examples 6, 12, 15, and 18 had water drop contact angles of 110 to 115 degrees and thus exhibited excellent stain-proof properties and water repellency. Also, the low reflection layer coated resin plate obtained in Example 24 has a visible ray reflectance of 1.0% and a haze percentage of 10% and thus exhibited an excellent glare-proof property. Also, the low reflection layer coated resin plate obtained in Example 17 had a water drop contact angle of 111 degrees, a visible ray reflectance of 1.0% and a haze percentage of 10%, and thus exhibited excellent water repellency as well as an excellent glare-proof property.

With Examples 8, 9, 13, and 14, with which hollow, non-aggregated silica microparticles were used in the low reflection layer solution, mirrors of low scattered light, with a haze percentage of 0.2%, were obtained. With Example 10, wherein chain-like aggregated silica microparticles were used in the low reflection layer solution, the low reflection layer coated resin plate obtained had a low visible ray reflectance of 1.0% and thus exhibited an excellent antireflection performance.

Furthermore, with Example 29, wherein a refractive index adjuster for decreasing the refractive index was added to the low reflection layer solution, the low reflection layer coated resin plate obtained had a low visible ray reflectance of 0.9% and thus exhibited an excellent antireflection performance. Also, with Example 28, wherein a refractive index adjuster for decreasing the refractive index and chain-like aggregated silica microparticles were added to the low reflection layer solution, the low reflection layer coated resin plate obtained had a low visible ray reflectance of 0.8% and thus exhibited an excellent antireflection performance. Also, the low reflection layer coated resin plate obtained in Example 21 was provided with conductivity.

[Table 2]

| Example or Comparative Example No. | Base material | Surface treatment | Coating film | | |
|---|---|---|---|---|---|
| | | | 1 | 2 | 3 |
| 1 | PMMA | None | Low reflection layer solution 1 | | |
| 2 | PMMA | None | Low reflection layer solution 2 | | |
| 3 | PMMA | None | Low reflection layer solution 3 | | |
| 4 | PMMA | None | Low reflection layer solution 4 | | |
| 5 | PMMA | None | Low reflection layer solution 5 | | |
| 6 | PMMA | None | Low reflection layer solution 6 | | |
| 7 | PMMA | None | Low reflection layer solution 7 | | |
| 8 | PMMA | None | Low reflection layer solution 8 | | |
| 9 | PMMA | None | Low reflection layer solution 9 | | |
| 10 | PMMA | None | Low reflection layer solution 10 | | |
| 11 | PMMA | None | Heat cured type hard coat solution 1 | Low reflection layer solution 5 | |
| 12 | PMMA | None | UV cured type hard coat solution 1 | Low reflection layer solution 6 | |
| 13 | PMMA | None | UV cured type hard coat solution 1 | Lowreflectionlayer solution 8 | |

[Table 2]   (continued)

| Example or Comparative Example No. | Base material | Surface treatment | Coating film | | |
|---|---|---|---|---|---|
| | | | 1 | 2 | 3 |
| 14 | PMMA | None | UV cured type hard coat solution 1 | Low reflection layer solution 9 | |
| 15 | PMMA | None | Heat cured type hard coat solution 1 | Low reflection layer solution 5 | Water repellency treatment solution |
| 16 | PC | None | UV cured type hard coat solution 1 | Low reflection layer solution 5 | |
| 17 | PC | None | UV cured type hard coat solution 2 | Low reflection layer solution 6 | |
| 18 | PC | None | Intermediate layer solution 1 | Lowreflectionlayer solution 6 | |
| 19 | PC | None | Intermediate layer solution 1 | Heat cured type hard coat solution 1 | Low reflection layer solution 5 |
| 20 | COP | Done | UV cured type hard coat solution 1 | Lowreflectionlayer solution 5 | |
| 21 | COP | Done | UV cured type hard coat solution 2 | Low reflection layer solution 4 | |
| 22 | COP | Done | Intermediate layer solution 1 | Heat cured type hard coat solution 1 | Low reflection layer solution 5 |
| 23 | COP | Done | Intermediate layer solution 1 | Lowreflectionlayer solution 5 | |
| 24 | PC | None | UV cured type hard coat solution 2 | Low reflection layer solution 5 | |
| 25 | MS600 | None | UV cured type hard coat solution 2 | Lowreflectionlayer solution 5 | |
| 26 | MS600 | None | Intermediate layer solution 2 | Lowreflectionlayer solution 5 | |
| 27 | MS600 | None | Low reflection layer solution 12 | | |
| 28 | PMMA | None | Low reflection layer solution 13 | | |
| 29 | PMMA | None | Low reflection layer solution 14 | | |

[Table 2]   (continued)

| Example or Comparative Example No. | Base material | Surface treatment | Coating film | | |
|---|---|---|---|---|---|
| | | | 1 | 2 | 3 |
| comparative Example 1 | PMMA | None | Low reflection layer solution 11 | | |

[Table 3]

| Example or Comparative Example No. | Cross cut test | Scuffing resistance | Contact angle | Optical characteristics | | | | |
|---|---|---|---|---|---|---|---|---|
| | JISK5400 | Cloth, 250g/cm$^2$ load | Contact angle with respect to water | Visible ray reflectance (%) | Visible ray transmittance (%) | Transmittance at 350nm | Haze value (%) |
| 1 | 1000 % | 3 | 95 | 1.5 | 97 | - | 0.5 |
| 2 | 100% | 3 | 97 | 1.6 | 97 | - | 0.5 |
| 3 | 100% | 3 | 96 | 1.5 | 97 | - | 0.5 |
| 4 | 100% | 3 | 96 | 1.4 | 97 | - | 0.5 |
| 5 | 100% | 3 | 95 | 1.4 | 98 | - | 0.5 |
| 6 | 100% | 4 | 110 | 1.3 | 98 | - | 0.5 |
| 7 | 100% | 3 | 97 | 1.4 | 98 | - | 0.5 |
| 8 | 100% | 3 | 86 | 2.0 | 95 | - | 0.2 |
| 9 | 100% | 3 | 95 | 1.0 | 97 | - | 0.2 |
| 10 | 100% | 3 | 96 | 1.0 | 98 | - | 0.1 |
| 11 | 100% | 4.5 | 100 | 1.4 | 97 | - | 0.5 |
| 12 | 100% | 5 | 110 | 1.4 | 97 | - | 0.5 |
| 13 | 100% | 4.5 | 87 | 1.8 | 96 | - | 0.2 |
| 14 | 100% | 4.5 | 97 | 0.8 | 97 | - | 0.2 |
| 15 | 1000 % | 5 | 115 | 1.4 | 97 | - | 0.5 |
| 16 | 1000 % | 4.5 | 96 | 1.4 | 94 | - | 0.5 |
| 17 | 100% | 5 | 111 | 1.0 | 95 | - | 10 |
| 18 | 100% | 4 | 110 | 1.3 | 94 | 0% | 0.6 |
| 19 | 100% | 4.5 | 96 | 1.4 | 93 | 0% | 0.5 |
| 20 | 100% | 4.5 | 96 | 1.4 | 97 | - | 0.5 |
| 21 | 100% | 4 | 96 | 1.4 | 98 | 0% | 0.6 |
| 22 | 100% | 4.5 | 96 | 1.5 | 95 | 0% | 0.5 |
| 23 | 100% | 4 | 96 | 1.5 | 97 | 0% | 0.5 |
| 24 | 100% | 4.5 | 96 | 1.0 | 95 | - | 10 |
| 25 | 100% | 5 | 99 | 1.5 | 97 | - | 0.2 |

[Table 3] (continued)

| Example or Comparative Example No. | Cross cut test | Scuffing resistance | Contact angle | Optical characteristics | | | |
|---|---|---|---|---|---|---|---|
| | JISK5400 | Cloth, 250g/cm$^2$ load | Contact angle with respect to water | Visible ray reflectance (%) | Visible ray transmittance (%) | Transmittance at 350nm | Haze value (%) |
| 26 | 100% | 4.5 | 97 | 1.5 | 97 | - | 0.5 |
| 27 | 100% | 3 | 96 | 1.4 | 97 | - | 0.5 |
| 28 | 100% | 3 | 95 | 0.8 | 98 | - | 0.1 |
| 29 | 100% | 3 | 95 | 0.9 | 97.5 | - | 0.5 |
| Comparative Example 1 | 100% | 2 | 95 | 1.5 | 96 | - | 0.5 |

Industrial Applicability

With this invention, by using a coating solution, which is obtained by hydrolyzing a hydrolyzable silicon compound under the presence of silica microparticles, and using comparatively large silica microparticles or using hollow silica microparticles or using silica microparticles and an above-described binder at specific proportions, a significantly low reflectance and high film strength are obtained and there is no variation of reflectance with time.

Also with this invention, by the adding of a curing catalyst to the coating solution, two- to three-dimensional polymerization is enabled at a low temperature, and a resin base material coated with a low reflection layer can be obtained readily.

Also, since a curing catalyst is added, the silicon compound for binder is hydrolyzed under the presence of the microparticles, and the above-mentioned silicon compound that is priorly oligomerized is used, a high film strength is obtained.

Since this invention' s low reflection film can be obtained at room temperature or a low temperature, it can be coated readily onto a resin base material and the introduction of a functional organic material is facilitated.

Also, by the provision of surface unevenness by the addition of microparticles, introduction of a fluorinated silicon compound, and water repellency treatment of the outermost surface of the coating film, the surface free energy of the coating film is decreased and a glare-proof property, water repellency, resistance against fouling, ease of dirt removal, and other characteristics can be added.

Also, by providing a hard coat layer between the base material and the low reflection layer, a high surface hardness can be obtained even when a resin base material is treated.

**Claims**

1.   A low reflection treated article manufacturing method wherein a low reflection layer solution, obtained by mixing and reacting (1) silica microparticles, comprising at least one type of silica microparticles selected from the group consisting of non-aggregated silica microparticles with an average particle diameter of 40 to 1000nm, hollow non-aggregated silica microparticles with an average particle diameter of 10 to 100nm, and chain-like aggregated silica microparticles with an average primary particle diameter of 10 to 100nm, (2) a hydrolyzable silicon compound, water, and a binder solution, containing a solvent and a hydrolysis catalyst for said silicon compound, to hydrolyze said silicon compound and (3) adding a curing catalyst, which promotes the condensation of silanol groups, is coated onto a resin base material and then reacted and cured at room temperature or within a range of room temperature to a temperature at which the base material will not be damaged (the deformation temperature or less in the case of a thermoplastic resin or the decomposition temperature or less in the case of a hardening resin) to form a low reflection layer, containing silica microparticles and a binder at a solids weight ratio of 30:70 to 95:5.

2.   Thelow reflection treated article manufacturing method according to Claim 1, wherein said curing catalyst is at least one type of compound selected from the group consisting of chelate compounds, fatty acid salts, primary to tertiary amines, polyalkyleneamines, sulfonates, magnesium perchlorate, and ammonium perchlorate.

3.  The low reflection treated article manufacturing method according to Claim 1, wherein said hydrolyzable silicon compound contains at least one type of organosilicon compound that is oligomerized in advance.

4.  The low reflect ion treated article manufacturing method according to Claim 1, wherein said hydrolyzable silicon compound is (A) an alkoxysilane, expressed by the following Formula (1) :

$$R^4O\text{-}((R^4O)_2Si\text{-}O)n\text{-}R^4 \tag{1}$$

(where, $R^4$ is an alkyl group with 1 to 4 carbon atoms, n = 1 to 20, and the structure of the condensate includes chain structures, branch structures, and cyclic structures) or
(B) a silane compound, expressed by the following Formula (2) :

$$R^1{}_aR^2{}_bSi(OR^3)_{4\text{-}a\text{-}b} \tag{2}$$

(where, $R^1$ is an alkyl group with 1 to 4 carbon atoms, an aryl group or halogenated alkyl group with 6 to 12 carbon atoms, a methacryloxyalkyl group with 5 to 8 carbon atoms, or a ureidoalkylene group, alkylene glycol group, which is an alkyl group substituted by a glycidyloxy group and having an alkyl group at one terminal end, aromatic ureidoalkylene group, aromatic alkylene group, or mercaptoalkylene group with 2 to 10 carbon atoms, $R^2$ is an alkyl group, aryl group, alkenyl group, halogenated alkyl group, or halogenated aryl group with 1 to 6 carbon atoms, $R^3$ is a hydrogen atom or an alkyl group, acyl group, or alkylacyl group with 1 to 4 carbon atoms, a = 1, 2 or 3, b = 0, 1 or 2, and a + b = 1, 2 or 3) or
said (A) alkoxysilane and/or (B) silane compound added with (C) a fluoroalkylsilane, expressed by the following Formula (3) :

$$R^5{}_cR^6{}_dSi(OR^7)_{4\text{-}c\text{-}d} \tag{3}$$

(where, $R^5$ is a fluorinated alkyl group with 1 to 12 carbon atoms, $R^6$ is an alkyl group, aryl group, alkenyl group, halogenated alkyl group, or halogenated aryl group with 1 to 6 carbon atoms, $R^7$ is a hydrogen atom or an alkyl group or acyl group with 1 to 4 carbon atoms, c = 1, 2 or 3, d = 0, 1 or 2, and c + d = 1, 2 or 3) .

5.  The low reflection treated article manufacturing method according to Claim 1, wherein the non-aggregated silica microparticles and hollow non-aggregated silica microparticles in said low reflection layer solution has a ratio of major axis length to minor axis length of 1.0 to 1.2.

6.  The low reflection treated article manufacturing method according to Claim 1, wherein the non-aggregated silica microparticles and hollow non-aggregated silica microparticles in said low reflection layer solution has a primary particle diameter standard deviation of 1.0 to 1.5.

7.  The low reflection treated article manufacturing method according to Claim 1, wherein a compound with a refractive index of 1.40 or less is added as a refractive index adjuster to said low reflection layer solution.

8.  The low reflection treated article manufacturing method according to Claim 1, wherein the resin base material comprises a resin, having a transparent styrene - methyl methacrylate copolymer resin as a component, and a solvent, having a benzene ring and a hydroxyl group, is used as the entirety or part of said solvent.

9.  The low reflection treated article manufacturing method according to Claim 8, wherein 0.01 to 20 parts by weight of said solvent are contained with respect to 100 parts by weight of the low reflection layer solution.

10. The low reflection treated article manufacturing method according to Claim 1, wherein prior to coating said low reflection layer solution onto the resin base material, at least one layer among (1) a UV curing type hard coat layer, (2) a heat curing type hard coat layer, (3) an intermediate layer, adherable to both the resin base material and the low reflection layer, and (4) a glare-proof layer, which adds a glare-proof property, is disposed between the resin base material and the low reflection layer.

11. The low reflection treated article manufacturing method according to Claim 10, wherein
said (1) UV curing type hard coat layer is a hard coat layer, obtained from a silicon-acrylic-based ultraviolet ray curing type hard coat solution;
said (2) heat curing type hard coat layer is hard coat layer containing (D) an alkoxysilane of the following Formula (4) and (E) colloidal silica:

$$R^8_a R^9_b Si(OR^{10})_{4-a-b} \qquad (4)$$

(where, $R^8$ is an alkyl group with 1 to 4 carbon atoms, an aryl group or halogenated alkyl group with 6 to 12 carbon atoms, a methacryloxyalkyl group with 5 to 8 carbon atoms, or a ureidoalkylene group, alkylene glycol group, which is an alkyl group substituted by a glycidyloxy group and having an alkyl group at one terminal end, aromatic ureidoalkylene group, aromatic alkylene group, or mercaptoalkylene group with 2 to 10 carbon atoms, $R^9$ is an alkyl group, aryl group, alkenyl group, halogenated alkyl group, or halogenated aryl group with 1 to 6 carbon atoms, $R^{10}$ is a hydrogen atom or an alkyl group, acyl group, or alkylacyl group with 1 to 4 carbon atoms, a = 1, 2 or 3, b = 0, 1 or 2, and a + b = 1, 2 or 3);
said (3) intermediate layer is an intermediate layer obtained from an intermediate layer coating solution, wherein an organosilicon compound of the following Formula (5) is added to an alkyl (meth)acrylate polymer or a copolymer of a (meth) acrylate monomer having an alkoxysilyl group and an alkyl (meth)acrylate:

$$R^{11}_n Si(R^{12})_{4-n} \qquad (5)$$

(where $R^{11}$ is an organic functional group, having a functional group selected from among the methacryloxy group, acryloxyl group, vinyl group, aryl group, and amino group, $R^{12}$ is one or a plurality of types of hydrolyzable groups selected from among alkoxyl groups, acetoxyl group, and chlorine, and n is organosilicon compound represented by an integer 1, 2 or 3, or said organosilicon compound is an alkoxysilane having a (meth)acrylic group); and
said (4) glare-proof layer is a glare-proof layer obtained by making a hard coat layer of said (1) or (2) or intermediate layer of (3) contain microparticles, having a metal or an inorganic compound of an average particle diameter of 0.05 μm to 10 μm.

12. The low reflection treated article manufacturing method according to Claim 1, wherein the surface of the resin base material is subject to a hydrophilization treatment in advance.

13. The low reflection treated article manufacturing method according to Claim 12, wherein said hydrophilization treatment of the surface of the resin base material is performed by a resin base material surface oxidation treatment, including corona discharge treatment, plasma treatment, UV ozone treatment, ozone water washing, or organic peroxide treatment.

14. The low reflection treated article manufacturing method according to Claim 10, wherein a solvent, having a benzene ring and a hydroxyl group, is used at least as a part of the solvent for the coating solution for forming at least one layer among said (1) UV curing type hard coat layer, (2) heat curing type hard coat layer, (3) intermediate layer, and (4) glare-proof layer.

15. A low reflection layer forming solution, obtained by making a solution, containing (1) silica microparticles, comprising at least one type of silica microparticles selected from the group consisting of non-aggregated silica microparticles with an average particle diameter of 40 to 1000nm, hollow non-aggregated silica microparticles with an average particle diameter of 10 to 100nm, and chain-like aggregated silica microparticles with an average primary particle diameter of 10 to 100nm, (2) a hydrolyzable silicon compound, (3) water, (4) a hydrolysis catalyst, and (5) a solvent, reacting to hydrolyze said silicon compound and adding a curing catalyst, which promotes the condensation of silanol groups that are generated from the silicon compound.

16. The low reflection layer forming solution according to Claim 15, wherein a solvent, having a benzene ring and a hydroxyl group, is used as whole or at least as a part of said solvent.

**17.** The low reflection layer forming solution according to Claim 15, wherein
said silicon compound is (A) an alkoxysilane, expressed by the following Formula (1):

$$R^4O\text{-}((R^4O)_2\text{-}Si\text{-}O)n\text{-}R^4 \hspace{2cm} (1)$$

(where, $R^4$ is an alkyl group with 1 to 4 carbon atoms, n = 1 to 20, and the structure of the condensate includes chain structures, branch structures, and cyclic structures) or
(B) a silane compound, expressed by the following Formula (2):

$$R^1{}_aR^2{}_bSi(OR^3)_{4\text{-}a\text{-}b} \hspace{2cm} (2)$$

(where, $R^1$ is an alkyl group with 1 to 4 carbon atoms, an aryl group or halogenated alkyl group with 6 to 12 carbon atoms, a methacryloxyalkyl group with 5 to 8 carbon atoms, or a ureidoalkylene group, alkylene glycol group, which is an alkyl group substituted by a glycidyloxy group and having an alkyl group at one terminal end, aromatic ureidoalkylene group, aromatic alkylene group, or mercaptoalkylene group with 2 to 10 carbon atoms, $R^2$ is an alkyl group, aryl group, alkenyl group, halogenated alkyl group, or halogenated aryl group with 1 to 6 carbon atoms, $R^3$ is a hydrogen atom or an alkyl group, acyl group, or alkylacyl group with 1 to 4 carbon atoms, a = 1, 2 or 3, b = 0, 1 or 2, and a + b = 1, 2 or 3) or
said (A) alkoxysilane and/or (B) silane compound added with (C) a fluoroalkylsilane, expressed by the following Formula (3) :

$$R^5{}_cR^6{}_dSi\,(OR^7)_{4\text{-}c\text{-}d} \hspace{2cm} (3)$$

(where, $R^5$ is a fluorinated alkyl group with 1 to 12 carbon atoms, $R^6$ is an alkyl group, aryl group, alkenyl group, halogenated alkyl group, or halogenated aryl group with 1 to 6 carbon atoms, $R^7$ is a hydrogen atom or an alkyl group or acyl group with 1 to 4 carbon atoms, c = 1, 2 or 3, d = 0, 1 or 2, and c + d = 1, 2 or 3).

**18.** A low reflection treated article obtained by the manufacturing method of Claim 1.

**INTERNATIONAL SEARCH REPORT**

| International application No. |
|---|
| PCT/JP2004/001269 |

**A. CLASSIFICATION OF SUBJECT MATTER**
Int.Cl$^7$ G02B1/10, B32B7/02, C08J7/04

According to International Patent Classification (IPC) or to both national classification and IPC

**B. FIELDS SEARCHED**

Minimum documentation searched (classification system followed by classification symbols)
Int.Cl$^7$ G02B1/10, B32B7/02, C08J7/04

Documentation searched other than minimum documentation to the extent that such documents are included in the fields searched
Jitsuyo Shinan Koho          1922–1996    Toroku Jitsuyo Shinan Koho    1994–2002
Kokai Jitsuyo Shinan Koho    1971–2002    Jitsuyo Shinan Toroku Koho    1996–2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-131507 A (Fuji Photo Film Co., Ltd.), 09 May, 2002 (09.05.02), Full text; all drawings (Family: none) | 1-18 |
| Y | JP 2002-40203 A (Teijin Kasei Kabushiki Kaisha), 06 February, 2002 (06.02.02), Par. Nos. [0001] to [0073] (Family: none) | 1-18 |
| Y | JP 4-175385 A (Nippon Aspherical Lens Co., Ltd.), 23 June, 1992 (23.06.92), Page 5, upper left column, line 13 to page 6, upper left column, line 12 (Family: none) | 1-18 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 April, 2004 (15.04.04) | 27 April, 2004 (27.04.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/001269 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 1-217301 A (Seiko Epson Corp.),<br>30 August, 1989 (30.08.89),<br>Page 4, lower right column, line 18 to page 5,<br>lower left column, line 2<br>(Family: none) | 2,12<br>1,3-11,14-18 |
| Y<br>A | JP 10-510860 A (Minnesota Mining and<br>Manufacturing Co.),<br>20 October, 1998 (20.10.98),<br>Page 2, lines 2 to 14<br>& WO 96/18918 A1 | 3<br>1,2,4-18 |
| Y<br>A | JP 2002-265866 A (Toppan Printing Co., Ltd.),<br>18 September, 2002 (18.09.02),<br>Claim 3<br>(Family: none) | 5<br>1-4,6-18 |
| Y<br>A | JP 2002-82207 A (Fuji Photo Film Co., Ltd.),<br>22 March, 2002 (22.03.02),<br>Par. No. [0018]<br>(Family: none) | 6<br>1-5,7-18 |
| Y<br>A | JP 62-275201 A (Asahi Chemical Industry Co.,<br>Ltd.),<br>30 November, 1987 (30.11.87),<br>Page 1, left column, line 5 to right column,<br>line 7<br>(Family: none) | 7<br>1-6,8-18 |
| Y<br>A | JP 59-155801 A (Asahi Chemical Industry Co.,<br>Ltd.),<br>05 September, 1984 (05.09.84),<br>Page 3, lines 1 to 8<br>(Family: none) | 8<br>1-7,9-18 |

Form PCT/ISA/210 (continuation of second sheet) (January 2004)